(19) Europäisches Patentamt
European Patent Office
Office européen des brevets

(11) Publication number: **0 307 996 B1**

(12) # EUROPEAN PATENT SPECIFICATION

(45) Date of publication of patent specification: **22.01.92**

(51) Int. Cl.5: **C09D 163/00**, C08K 3/36, C09D 5/08, C08G 18/58, C08G 18/40

(21) Application number: **88201886.4**

(22) Date of filing: **05.09.88**

(54) **A corrosion preventing coating composition to be applied as a thin layer for steel sheet.**

(30) Priority: **04.09.87 JP 222588/87**

(43) Date of publication of application:
**22.03.89 Bulletin 89/12**

(45) Publication of the grant of the patent:
**22.01.92 Bulletin 92/04**

(84) Designated Contracting States:
**DE GB**

(56) References cited:
**EP-A- 0 024 811**
**EP-A- 0 219 976**
**DE-A- 3 520 763**
**GB-A- 2 050 867**
**US-A- 4 320 047**

(73) Proprietor: **Nippon Paint Co., Ltd.**
**2-1-2, Oyodokita Oyodo-ku**
**Osaka-shi Osaka-fu(JP)**

Proprietor: **NIPPON STEEL CORPORATION**
**6-3 Otemachi 2-chome Chiyoda-ku**
**Tokyo 100(JP)**

(72) Inventor: **Takimoto, Masaaki**
**842-66, Oasa Kishiwada**
**Kadoma-shi Osaka-fu(JP)**
Inventor: **Yoshida, Yuichi**
**E-10-503, 7, Otokoyamayutoku**
**Yawata-shi Kyoto-fu(JP)**
Inventor: **Oshiba, Toshiharu**
**21-20, Shimomaruko 3-chome**
**Ota-ku Tokyo-to(JP)**
Inventor: **Shindo, Yoshio**
**c/o Nippon Steel Corporation 1, Kimitsu**
**Kimitsu-shi Chiba-ken(JP)**
Inventor: **Kabeya, Motoo**
**c/o Nippon Steel Corporation 1, Kimitsu**
**Kimitsu-shi Chiba-ken(JP)**
Inventor: **Shimazu, Takashi**
**c/o Nippon Steel Corporation 1, Kimitsu**
**Kimitsu-shi Chiba-ken(JP)**

(74) Representative: **Smulders, Theodorus A.H.J., Ir. et al**
**Vereenigde Octrooibureaux Nieuwe Parklaan 107**
**NL-2587 BP 's-Gravenhage(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 307 996 B1

## Description

The present invention relates to a corrosion preventive coating composition for steel sheet and more specifically to a corrosion preventive coating composition to be applied as a thin layer for steel sheet with excellent stamping formability, spot-weldability, electrodeposition paintability and corrosion resistance.

### Background of the invention

For the purpose of rust proofing of galvanized steel sheet and the like, surface treatment with a chromate solution or application of corrosion preventive paint containing an anti-corrosive pigment as chromate, lead compound, zinc compound, zinc powder and the like have been widely used.

However, there always arises a question of environmental pollution due to the elution of heavy metal ions as chromium or the like from the coating thus formed. Therefore, various techniques of using anti-corrosive coatings based on other materials than chromate or anti-corrosive pigments containing other heavy metal ions, e.g. a quantity of colloidal silica, have been offered as, for example, Japanese Patent Application Kokai Nos. 224174/83; 177476/83; 1335/79 and 50480/87. These coating compositions are all of aqueous type and in order to maintain said silica in stabilized colloidal conditions in the compositions, an amount of alkali or ammonium ions are necessarily contained therein. Therefore, there are always problems in respect of film properties and especially in water resistance of the formed coatings. To evade the said problems, even if an amount of fine silica particles are added to a solvent type coating composition, there arises a troublesome question of undesired increase in viscosity due to the structural viscosity of the coating composition this times and it is hardly possible to obtain a uniform thin coating. One may use an alcohol to destroy said structural viscosity, thereby lowering the viscosity of the coating composition, and, however, such technique can not be practically applied to the coating composition containing polyisocyanate compound as a hardener.

Since a corrosion preventive organic coated steel sheet is used for making automobile body portions and other articles which are required to be of high anti-corrosive nature, it must be excellent in formability and spot-weldability as well as corrosion resistance properties. Usually, an electrodeposition coating is applied onto said coated sheet, and therefore, it is also required to be excellent in the formation of such electrodeposition coating film on its surface and adhesion properties to the electrodeposited coating.

Heretofore proposed pre-coat of the corrosion preventive steel sheet contains a quantity of conductive pigments for electrodeposition coating and spot-welding purposes. Therefore, there necessarily is a question of decrease in stamping formability of the coated product and there is a big demand for a coating composition which is free from the conductive pigments and capable of forming a uniform thin layer which will allow spot-welding and electrodeposition coating and still have a highly anti-corrosive nature. Thus, to the latest pre-coated anti-corrosive steel sheet, is required a coating composition which is applicable as a thin layer and fulfils the requirements of having far improved (1) corrosion resistance, (2) adhesion properties to the coating formed on the precoated steel sheet and especially cationic electrodeposition coating, and (3) low temperature baking properties, e.g. curable at the maximum plate temperature of 150 °C in 10 seconds. Though a composition containing a polyisocyanate hardening agent seems to be specifically important from the standview of low temperature baking, none of the solvent type coating composition to be applied as a thin layer for steel sheet, containing solvent soluble epoxy resin, polyisocyanate compound and silica particles have been practically used due to the problems hereinbefore stated.

It is, therefore, an object of the invention to provide a corrosion preventive coating composition for steel sheet which will not be accompanied with troublesome elution of harmful substances when the coated sheet is subjected to a surface treatment step and capable of resulting a thin uniform coating with excellent corrosion resistance, improved formability and spot weldability and having excellent adhesion properties to an electrodeposition coating.

### Summary of the invention

According to the invention, the abovementioned object of the invention can be realized by providing a corrosion preventive coating composition to be applied as a thin layer for steel sheet which comprises

(A) a bis-phenol type epoxy resin having a number average molecular weight of 300 to 100,000, in an amount of 30 weight % or more of the total solid of the coating composition,

(B) at least one hardener selected from a polyisocyanate compound and a blocked polyisocyanate compound, in an amount of one tenth to 2 times the weight of said epoxy resin solid,

(C) fumed silica having an average grain diameter of 0.1 to 100mμ, in an amount of 5 to 50 weight % of the total solid of the coating composition, and

(D) a ketonic organic solvent in an amount of 40 weight % or more of the total weight of the coating composition, solid content of the composition being 10 to 50% by weight.

Thus, in the present invention, is offered a coating composition comprising a particular combination of a bis-phenol type epoxy resin, a polyisocyanate compound, fumed silica and a ketonic organic solvent. Since the resinous component is composed of epoxy resin and polyisocyanate compound, it is advantageously cured at a lower baking temperature. Since the fumed silica is contained in a higher concentration, the composition is excellent in corrosion resistance properties.

In order to obtain the desired stamping formability, electrodeposition paintability and spot-weldability, the designed composition must be applicable as a thin layer and for a better application characteristics, viscosity of said composition must be well controlled. The inventors have surprisingly found that when a ketonic organic solvent is compounded with the combination of bis-phenol type epoxy resin, polyisocyanate compound and fumed silica, coating viscosity is effectively lowered and the aforesaid objects are ingeniously attained. However, for said purposes, the ketonic organic solvent must be added, if desired together with lubricant, to make the solid content of the composition 10 to 50 weight %.

As the binder resin (A) component, use is made of a bisphenol type epoxy resin being soluble in an organic solvent and having a number average molecular weight of 300 to 100,000, which is excellent in water resistance, alkali resistance, and adhesion properties toward substrate material as well as a top coat. Examples are the epoxy resins represented by the formula:

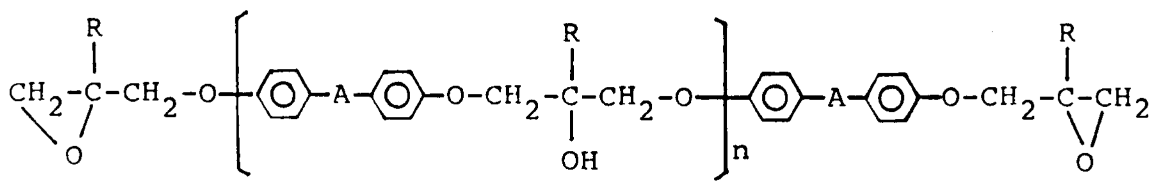

in which R is H or $CH_3$; A stands for $>C(CH_3)_2$, $-CH_2-$, $-O-$,

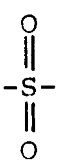 or -S- group.

Particular preference is given to the epoxy resin wherein A stands for

$$>C(CH_3)_2$$

group , having a number average molecular weight of 1,000 to 5,000, because of having far improved anti-corrosion properties.

If the number average molecular weight of said epoxy resin is less than 300, it is unable to get a high polymer when reacted with a polyisocyanate compound and hence, the resulted coating is deficient in anti-corrosive properties. On the other hands, when the number average molecular weight of said epoxy resin is more than 100,000, there only results a poor crosslinking reaction and hence, the anti-corrosive properties of the coating are likewise poor.

In the present coating composition, the aforesaid bis-phenol xy resin (A) must be compounded in an amount of 30% by weight or more of the total solid of the composition. This is because, if the content of said resin (A) is less abovementioned limit, there is a tendency that a brittle coating is obtained and the adhesive properties of the coating after stamping be lowered.

The hardener (B) component as used in the present invention is selected from the group consisting of polyisocyanate compounds and blocked polyisocyanate compounds.

Examples of said polyisocyanate compounds are aliphatic or alicyclic diisocyanate compounds as hexamethylene diisocyanate, isophorone diisocyanate, hydrogenated diphenyl methane diisocyanate and the like; aromatic diisocyanate compounds as tolylene diisocyanate, diphenyl methane-4,4'-diisocyanate

and the like; triisocyanate compounds as adducts of 1 mol of trimethylol propane and 3 moles of either one of the abovementioned diisocyanates, trimer of hexamethylene diisocyanate, trimer of tolylene diisocyanate and the like.

Either one or 2 or more of the abovementioned hardeners are satisfactorily used.

As the blocked polyisocyanate compounds, any of the abovementioned polyisocyanate compounds, but blocked with a blocking agent, may be successfully used. Such blocking agent, must be a compound capable of reacting with an isocyanate group and resulting an addition product which is stable at a room temperature but is dissociated at a higher temperature encountered at a baking stage, thereby producing an isocyanate group again. Examples of such blocking agents are lactam series blocking agents as ε-caprolactam, γ-butyrolactam and the like; oxime series blocking agent as methyl ethyl ketoxime, cyclohexanone oxime and the like; alcoholic blocking agents as methanol, ethanol, isobutyl alcohol and the like; phenolic blocking agents as phenol, p-t-butyl phenol, cresol and the like; and β-diketone blocking agents as ethyl acetoacetate, methyl acetoacetate ,acetyl acetone, dimethyl malonate, diethyl malonate and the like.

From the dissociation easiness at a lower temperature and stability under paint storage conditions, particular preference is given to methyl ethyl ketoxime and β-diketone compounds.

The abovementioned hardener (B) is compounded in the present coating composition in an amount of one tenth to 2 times the weight of said epoxy resin (A) solid.

Thus selected epoxy resin (A) and hardener (B) are reacted at a relatively lower baking temperature in a shorter period of time, as, for example, at a peak metal temperature of about 100° C or more, preferably at 120 to 200° C, in 5 to 60 seconds.

If the mixing ratio of said (B)/(A) is less than 1/10, there results a poor crosslinking reaction and hence a deficient corrosion resistance of the coating. On the other hand, if the said ratio is more than 20/10, there is a tendency that water-resistance and alkali resistance of the coating be lowered and adhesion properties to a top coat be likewise in want of. Particularly preferable compounding ratio of said hardener (B) and epoxy resin (A) is such that NCO equivalent of said hardener (B)/OH equivalent of epoxy resin (A) is within a range of 0.1/1 ~ 1.0/1. By the adoption of this conditions, the maximum anti-corrosion properties can be attained.

The abovementioned hardener may be co-used with a resol type phenol resin as desired. This is especially benefit in promoting the film-forming reaction at a relatively lower baking temperature as, for example, at a peak metal temperature of 100 to 130° C

Particularly preferable resol type phenol resins are the compounds of the formula;

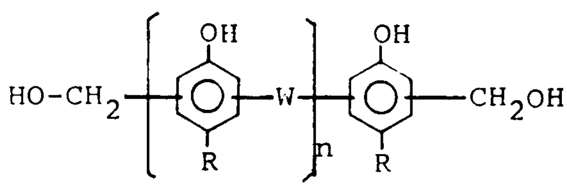

wherein n is 0 or an integer of 1 to 4; W is $-CH_2-$ or $-CH_2-O-CH_2$; R is $CH_3$, H, or

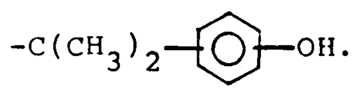

Such a resol type phenol resin is preferably compounded in the present coating composition is an amount of one tenth to 10 times the weight of said hardener (B) solid. If the weight ratio of said phenol resin/hardener (B) is more than 10/1, there is a tendency that alkali resistance of the resulted coating be lowered, whereas if the said ratio is less than 1/10, there is no desired reaction promoting effect.

In the present invention, for the purpose of obtaining the abovementioned desired corrosion resistance while preventing undesired elution of harmful substances from the coating in alkali cleaning and conversion coating steps adopted as desired, fumed silica (C) having an average grain diameter of 0.1 to 100mμ should be is compounded in an amount of 5 to 50% by weight of the total solid of the coating composition. If the average grain diameter of said silica is less than 0.1mμ, there is a shortage in adhesion properties of the coating to a top coat and in alkali resistance of the coating.

Whereas, when the average grain diameter of said silica particles exceeds over the upper limit of 100mμ, there is a tendency that the corrosion resistance of the coating be lowered and smoothness of electrodeposited coating be likewise ruined. Therefore, the silica particles must have an average grain diameter of 0.1 to 100mμ.

The fumed silica (C) is compounded in the present coating composition is an amount of 5 to 50% by weightm, preferably 15 to 30% by weight, of the total solid of the composition. Heretofore, such a larger quantity of fumed silica have never been used because of resulting an excessively high viscous composition. And however, in the present invention, this has first been solved out by the adoption of particular ketonic organic solvent (D) herein under stated.

The inventors have found that when the amount of said fumed silica (C) is less than 5% by weight of the total solid of the coating composition, there is a shortage in corrosion resistance of the coating, and, on the othere hand, if the said amount exceeds over the upper limit of 50% by weight, there is a tendency that adhesion properties of the coating after stamping are markedly decreased and hence, it is undesired for the object of the invention.

In the present invention, the abovementioned epoxy resin (A), hardener (B) and fumed silica (C) are dissolved or dispersed in an organic solvent to obtain a coating composition.

However, as the organic solvent, it is essential that a ketonic organic solvent (D) be used in an amount of 40% by weight or more, so as to bring the solid content of the coating composition to 10 to 50% by weight.

By the adoption of said conditions, it is provided a coating composition capable of forming a thin, uniform coating therefrom.

If the solid content of the coating composition is less than 10% by weight, it is unecononical because of the necessity for using an excessively larger quantity of expensive organic solvent. Whereas, if the solid content of the coating composition exceeds over the upper limit of 50% by weight, it is hardly possible to form a thin uniform coating from the coating composition.

Examples of ketonic organic solvents are methyl isobutyl ketone, acetone, cyclohexanone, isophorone and the like. If desired, additional solvents other than ketone organic solvent may be used together with said ketone solvent. However, it is pointed that employment of such solvent as being reactive with polyisocyanate compound, solvent as being reactive with polyisocyanate compound, e.g. water, alcohol and the like, should be avoided as a matter of course.

The relation of fumed silica and ketonic organic solvent shall be explained more minutely herein below.

If the humed silica content of the coating composition is excessively increased to a higher order for the attainment of a higher corrosion resistance of the coating, there is a tendency that paint viscosity is markedly increased and solid matters contained are easily aggromerated. In extreme case, it is hardly possible to make a uniform, thin (several microns thickness) coating therefrom. Therefore, in a conventional coating composition containing fumed silica, attempts have been made to add a solvent having a higher degree of hydrogen bonding properties, e.g. alcohol, water and the like to lower the viscosity of the coating composition.

However, for this end, the resinous material used must be soluble in the mixture of said additional solvent and the original solvent contained in the coating composition and polyisocyanate compound can not be used as a hardener.

Thus, the abovementioned technique can never be applied to the present coating composition. The inventors have surprisingly found that a quantity of fumed silica can be compounded in a solvent type coating composition providing selecting a ketonic organic solvent and that bisphenol type epoxy resin and polyisocyanate compound are stably dissolved in said ketonic organic solvent, thereby obtaining a resinous composition capable of being cured at a lower temperature and forming a tough coating. On the basis of these findings, the present invention has been made. From the standview of stamping formability of pre-coated steel sheet, the present coating composition may further contain 0.1 to 10% by weight of the total solid of the composition of such lubricants as polyolefins, carboxylic acid esters, metallic salts of carboxylic acids, polyalkylene glycols, molybdenum disulfide, silicone compounds, fluorinated compounds and the like. Particularly preferable lubricants are polyethylene waxes having a density of 0.94 or more, molecular weight of 1,000 to 10,000 and an acid value of 15 KOH mg/g or less.

However, when adopted such lubricants, the maximum quantity should be limited to 10% by weight of the total solid of the coating composition. This is because, if the lubricant !content exceeds over said limit, there is a marked decrease in adhesive properties of the coating after stamping, which is not desired.

If desired, the present coating composition may further contain conventional anti-corrosive pigments (e.g. chromate pigments and especially hard soluble zinc chromate, lead chromate, barium chromate, phosphate pigments, plumbate pigments and the like), body pigments (e.g. carbonate pigments, silicate pigments and the like), colored pigments (e.g. titanium oxide, carbon black and the like), anti-corrosive agents (e.g. amine compounds, phenolic carboxylic acid and the like), dispersion stabilizer and the like. However, in order to maintain the desired spot-weldability and stamping formability, these additives should have an average grain diameter of 10$\mu$ or less or should be maintained in the coating composition in this

fine particle size.

The present coating composition is very useful as a paint for a corrosion preventive coated steel sheet which is to be used in an automobile, a household furniture, an electric appliance and the like. Various substrate materials as cold-rolled steel sheet, hot dipped galvanized steel sheet, hot dipped zinc-aluminium alloy plated steel sheet, hot dipped galvannealed steel sheet, electro galvanized steel sheet, zinc-mickel or zinc-iron alloy electroplated steel sheet, zinc-iron alloy double electroplated steel sheet and the like.

In applying the present coating composition onto said substrate material, the substrate is first subjected to cleaning as, for example, alkali-cleaning, as desired, and then directly or after subjected to a conventional pre-treatment, coated with the present coating composition. As the pre-treatment, mention is made of chromating treatment and phosphating treatment. The former includes electro-chromating treatment, none rinse type chromating treatment, reactive chromating treatment and the like and the latter includes zinc phosphate treatment. Among them, preference is givento chromating treatment since a high degree of corrosion resistance can be obtained therewith. The most preferable chromating treatments are electro-chromating treatment and reactive chromaing treatment, showing the least chromium solubility.

The present coating composition may be applied onto said substrate by using any conventional application means including spraying, roll coating, flow coating and dip coating, and bake-dried to obtain a coating. There is no need of adopting particular baking conditions and low temperature baking is the most characteristic feature of the present coating composition. In the so-called bake-hardenable steel sheet whose tension is to be increased by heating after forming articles therefrom, it is generally required to adopt the least heating of the steel sheet before said forming. When the present coating composition is used in such an application, it is possible to bring the peak metal temperature to 100 to 160°C in 5 to 60 seconds of baking time. Therefore, the abovementioned requirements are fully met with the present coating composition and a high quality coating can be formed therefrom, without spoiling said bake-hardenability. The steel sheet coated with a thin layer (dry-film thickness of 0.3 to 3$\mu$) of the present coating composition shows excellent corrosion resistance, and stamping formability. Spot-weldability is excellent, too.

If the coating thickness is less than 0.3$\mu$, there is a tendency that the corrosion resistance of the coating be lowered and if the coating thickness is more than 3$\mu$, certain difficulties are generated in respects of spot-weldability and electrodeposition paintability.

In order to obtain economically the abovementioned thin uniform layer of the present coating composition, it is also very important to control viscosity, thixotropic proterties and dispersion stability of the composition at the optimum ranges, respectively. That is, the viscosity should preferably be maintained at 10 to 100 sec. (20°C) #4 Ford Cup, and thixotropic index should preferably maintained at 5.0 or less, more preferably 2.0 or less. Incidentally, said thixotropic index (hereinafter abreveated as T1 value) is the ratio of viscosity measured at 6 rpm by using B type viscometer (BM type, manufactured by Tokyo Keiki) and No. 3 rotor and viscosity measured at 60 rpm.

The most characteristic features of thus prepared coated steel sheet reside in that when an electrodeposition coating is formed on the surface of said coated steel sheet, qualities of thus formed electrodeposition coating, i.e. smoothness, uniformity and adhesion properties, are quite excellent. Thus, the present coating compositions can meet various requirements in automobile, household furniture and electric appliance and other industries and are very useful as coating compositions for anti-corrosive, coated steel sheet.

The invention shall be now more fully explained in the following Examples. Unless otherwise being stated, all parts and percentages are by weight.

Reference Example 1

Preparation of epoxy resin varnish

400 parts of Epicoat 1007 were dissolved in a mixture of 300 parts of xylene and 300 parts of ethyleneglycol monoethyl ether acetate to obtain an epoxy resin varnish (solid content 40%).

Reference Example 2

Praparation of silica dispersion paste

To 792 parts of cyclohexanone, were added 100 parts of Aerosil 300, 8 parts of Ceridust 3620 and 100 parts of the epoxy resin varnish obtained in Reference Example 1 and the mixture was stirred at a higher speed by using disper to obtain a silica dispersion paste.

Example 1

96.8 parts of the epoxy resin varnish obtained in Reference Example 1, 250 parts of the silica dispersion paste obtained in Reference Example 2, 30.4 parts of HMDI-AEA and 22.8 parts of cyclohexanone were mixed and dissolved together to obtain a coating composition having a solid contetnt of 25%. The solid compositionis shown below.

| | |
|---|---|
| epoxy resin | 48.7% |
| blocked isocyanate compound | 24.3% |
| silica | 25.0% |
| polyethylene wax | 2.0% |
| Total | 100.0% |

Viscosity of the composition was 23 sec. (20 ° C) #4 Ford Cup and TI value was 0.85.

Example 2 to 15 and Comparative Example 1 to 9

The same procedures as stated in Example 1 were repeated with the materials shown in Table I to obtain coating compositions each having a solid content of 25%. However, the solid content of the composition of Comparative Examples 5 was 20%. The materials used in these Examples and Comparative Examples are as follows.

Bylone 200:

Oil-free polyester resin having a number average molecular weight of 15,000, dissolved in cyclohexanone/isophorone (1/1). Solid content 40%, trademark of Toyo Boseki K.K.

Carboxylated polyethylene resin:

carboxyl group content 12 mole %, 20% aqueous solution.

Epicoat 1001:

bisphenol A type epoxy resin, number average molecular weight 900, trademark of Shell Chemical.

Epicoat 1007:

bisphenol A type epoxy resin, number average molecular weight 2900, trademark of Shell Chem.

Epicoal 1009:

bisphenol A type epoxy resin, number average molecular weight 3750, trademark of Shell Chem.

Super Beckamine J-820-60:

melamine resin dissolved in butanol/xylene, solid content 60%, trademark of Dainihon Ink. Chem. Ind. Ltd.

BKS-316:

resol type phenol resin dissolved in methyl isobutyl ketone/n-butanol, solid content 60%, manufactured by Showa Kobunshi K.K.

HMDI-AEA:

hexamethylene diisocyanate trimer blocked with ethyl acetoacetate dissolved in ethyleneglycol monoethyle ether acetate/xylene, solid content 80%

HMDI-CLN:

hexamethylene diisocyanate trimer blocked with ε-caprolactam disolved in ethyleneglycol monoethyl ether acetate/xylene, soled content 80%

HMDI:

hexamethylene diisocyanate trimer (solid 100%)

Aerosil 300:

humed silica, average primary grain diameter 7mμ, trademark of Nihon Aerosil K.K.

Aerosil OX50:

humed silica, average primary grain diameter 40mμ, trademark of Nihon Aerosil K.K.

Snowtex N:

Colloidal silica ag. dispersion, solid 20%, trademark of Nissan Kagaku K.K.

Ceridust 3620:

Polyethylene wax having a density of 0.95 to 0.97, molecular weight of 2000, and an acid value of 0, trademark of Hachst

Table 1

| | | Exam. 1 | Exam. 2 | Comp.Exam. 1 |
|---|---|---|---|---|
| binder resin | species | Epicoat 1007 | Epicoat 1007 | Epicoat 100 |
| | average molecular weight | 2900 | 2900 | 2900 |
| | content (per total solid) | 48.7% | 48.7% | 48.7% |
| hardener | species | HMDI-AEA | HMDI-AEA | HMDI-AEA |
| | amount (per 10 part binde resin) | 5 | 5 | 5 |
| silica particles | species | Aerosil 300 | Aerosil OX50 | silica powder |
| | average grain diam. | 7mμ | 40mμ | 1μ |
| | content (per total solid) | 25.0% | 25.0% | 25.0% |
| solvent | species | cyclohexanone | cyclohexanone | cyclohexanone |
| | contents in the composition | 55.2% | 55.2% | 55.2% |
| lubricant | species | Ceridust 3620 | Ceridust 3620 | Ceridust 3620 |
| | content (per total solid) | 2.0% | 2.0% | 2.0% |

Table 1 (Continued)

| | | Exam. 3 | Exam. 4 | Comp.Exam. 2 |
|---|---|---|---|---|
| binder resin | species | Epicoat 1007 | Epicoat 1007 | Epicoat 1007 |
| | average molecular weight | 2900 | 2900 | 2900 |
| | content (per total solid) | 55.3% | 58.7% | 63.3% |
| hardener | species | HMDI-AEA | HMDI-AEA | HMDI-AEA |
| | amount (per 10 part binder resin) | 5 | 5 | 5 |
| silica particles | species | Aerosil 300 | Aerosil 300 | Aerosil 300 |
| | average grain diam. | 7mμ | 7mμ | 7mμ |
| | content (per total solid) | 15.0% | 10.0% | 3.0% |
| solvent | species | cyclohexanone | cyclohexanone | cyclohexanone |
| | contents in the composition | 52.5% | 53.0% | 49.3% |
| lubricant | species | Ceridust 3620 | Ceridust 3620 | Ceridust 3620 |
| | content (per total solid) | 2.0% | 2.0% | 2.0% |

Table 1 (Continued)

| | | Exam. 5 | Comp.Exam. 3 | Comp.Exam. 4 |
|---|---|---|---|---|
| binder resin | species | Epicoat 1007 | Epicoat 1007 | oil-free polyester |
| | average molecular weight | 2900 | 2900 | 15000 |
| | content (per total solid) | 42.0% | 28.7% | 48.7% |
| hardener | species | HMDI-AEA | HMDI-AEA | HMDI-AEA |
| | amount (per 10 part binder resin) | 5 | 5 | 5 |
| silica particles | species | Aerosil 300 | Aerosil 300 | Aerosil 300 |
| | average grain diam. | 7mμ | 7mμ | 7mμ |
| | content (per total solid) | 35.0% | 55.0% | 25.0% |
| solvent | species | cyclohexanone | cyclohexanone | cyclohexanone |
| | contents in the composition | 57.9% | 63.3% | 55.2% |
| lubricant | species | Ceridust 3620 | Ceridust 3620 | Ceridust 3620 |
| | content (per total solid) | 2.0% | 2.0% | 2.0% |

Table 1 (Continued)

| | | Comp.Exam. 5 | Exam. 6 | Exam. 7 |
|---|---|---|---|---|
| binder resin | species | carboxylated polyethlene resin | Epicoat 1001 | Epicoat 1009 |
| | average molecular weight | --- | 470 | 3750 |
| | content (per total solid) | 75.0% | 48.7% | 48.7% |
| hardener | species | (no species) | HMDI-AEA | HMDI-AEA |
| | amount (per 10 part binder resin) | | 5 | 5 |
| silica particles | species | Snowtex N | Aerosil 300 | Aerosil 300 |
| | average grain diam. | 10~20mμ | 7mμ | 7mμ |
| | content (per total solid) | 25.0% | 25.0% | 25.0% |
| solvent | species | water | cyclohexanone | cyclohexanone |
| | contents in the composition | 80.0% | 55.2% | 55.2% |
| lubricant | species | (no species) | Ceridust 3620 | Ceridust 3620 |
| | content (per total solid) | | 2.0% | 2.0% |

Table 1 (Continued)

<table>
<tr><th colspan="2"></th><th>Comp.Exam. 6</th><th>Comp.Exam. 7</th><th colspan="2">Exam. 8</th></tr>
<tr><td rowspan="3">binder resin</td><td>species</td><td>Epicoat 1007</td><td>Epicoat 1007</td><td colspan="2">Epicoat 1007</td></tr>
<tr><td>average molecular seight</td><td>2900</td><td>2900</td><td colspan="2">2900</td></tr>
<tr><td>content (per total solid)</td><td>60.8%</td><td>60.8%</td><td colspan="2">48.7%</td></tr>
<tr><td rowspan="2">hardener</td><td>species</td><td>Super Beckamine J-820-60</td><td>BKS-316</td><td>HMDI-AEA</td><td>BKS-316</td></tr>
<tr><td>amount (per 10 part binder resin)</td><td>2</td><td>2</td><td>3</td><td>2</td></tr>
<tr><td rowspan="3">silica particles</td><td>species</td><td>Aerosil 300</td><td>Aerosil 300</td><td colspan="2">Aerosil 300</td></tr>
<tr><td>average grain diam.</td><td>7mμ</td><td>7mμ</td><td colspan="2">7mμ</td></tr>
<tr><td>content (per total solid)</td><td>25.0%</td><td>25.0%</td><td colspan="2">25.0%</td></tr>
<tr><td rowspan="2">solvent</td><td>species</td><td>cyclohexanone</td><td>cyclohexanone</td><td colspan="2">cyclohexanone</td></tr>
<tr><td>contents in the composition</td><td>47.7%</td><td>50.2%</td><td colspan="2">54.2%</td></tr>
<tr><td rowspan="2">lubricant</td><td>species</td><td>Ceridust 3620</td><td>Ceridust 3620</td><td colspan="2">Ceridust 3620</td></tr>
<tr><td>content (per total soled)</td><td>2.0%</td><td>2.0%</td><td colspan="2">2.0%</td></tr>
</table>

Table 1 (Continued)

| | | Exam. 9 | Exam. 10 | Exam. 11 |
|---|---|---|---|---|
| binder resin | species | Epicoat 1007 | Epicoat 1007 | Epicoat 1007 |
| | average molecular weight | 2900 | 2900 | 2900 |
| | content (per total solid) | 48.7% | 56.2% | 33.2% |
| hardener | species | HMDI-AEA | HMDI-AEA | HMDI-AEA |
| | amount (per 10 part binder resin) | 5 | 3 | 12 |
| silica particles | species | Aerosil 300 | Aerosil 300 | Aerosil 300 |
| | average grain diam. | 7mμ | 7mμ | 7mμ |
| | content (per total solid) | 25.0% | 25.0% | 25.0% |
| solvent | species | cyclohexanone | cyclohexanone | cyclohexanone |
| | contents in the composition | 55.2% | 52.9% | 60.1% |
| lubricant | species | Ceridust 3620 | Ceridust 3620 | Ceridust 3620 |
| | content (per total solid) | 2.0% | 2.0% | 2.0% |

Table 1 (Continued)

| | | Exam. 12 | Exam. 13 | Exam. 14 |
|---|---|---|---|---|
| binder resin | spcies | Epicoat 1007 | Epicoat 1007 | Epicoat 1007 |
| | average molecular weight | 2900 | 2900 | 2900 |
| | content (per total solid) | 66.4% | 48.7% | 48.7% |
| hardener | species | HMDI-AEA | HMDI-CLN | HMDI |
| | amount (per 10 part binder resin) | 1 | 5 | 5 |
| silica particles | species | Aerosil 300 | Aerosil 300 | Aerosil 300 |
| | average grain diam. | 7mμ | 7mμ | 7mμ |
| | content (per total solid) | 25.0% | 25.0% | 25.0% |
| soluvent | species | cyclohexanone | cyclohexanone | cyclohexanone |
| | contents in the composition | 49.7% | 55.2% | 56.7% |
| lubricant | species | Ceridust 3620 | Ceridust 3620 | Ceridust 3620 |
| | content (per total solid) | 2.0% | 2.0% | 2.0% |

Table 1 (Continued)

| | | Comp.Exam. 8 | Comp.Exam. 9 | Exam. 15 |
|---|---|---|---|---|
| binder resin | species | Epicoat 1007 | Epicoat 1007 | Epicoat 1007 |
| | average molecular weight | 2900 | 2900 | 2900 |
| | content (per total solid) | 48.7% | 48.7% | 48.7% |
| hardener | species | HMDI-AEA | HMDI-AEA | HMDI-AEA |
| | amount (per 10 part binder resin) | 5 | 5 | 5 |
| silica particles | species | Aerosil 300 | Aerosil 300 | Aerosil 300 |
| | average grain diam. | 7mμ | 7mμ | 7mμ |
| | content (per total solid) | 25.0% | 25.0% | 25.0% |
| solvent | species | ethylene glycol monoethyl ether acetate | benzyl alcohol | acetone/isophorone( = 1/1) |
| | contents in the composition | 55.2% | 55.2% | 55.2% |
| lubricant | species | Ceridust 3620 | Ceridust 3620 | Ceridust 3620 |
| | content (per total solid) | 2.0% | 2.0% | 2.0% |

Zinc-nickel alloy electroplated steel sheet (Ni content 11%, alloy coating weight 20g/$m^2$) was subjected to electrochromating to obtain a pre-treated substrate. To these substrate materials, each of the coating compositions obtained in Examples 1 to 15 and comparative Examples 1 to 9 was applied by roll coating

means, and bake-dried so as to bring the peak metal temperature to 150°C in seconds (120°C in 20 seconds in Examples 8 and 9), to obtain the coated test sheets.

The following tests were carried out with these test sheets.

(A) corrosion resistance properties

Cross-cuts were biven on the coating by cutter knife and salt spray test (JIS-Z-2371) was carried out with thus prepared test plate for 2,000 hours.

Thereafter, rust generation on the said coating was visually observed.

Evaluation standards:

◎ no red rusting, less than 50% white rusting
○ no red rusting, 50% or more white rusting
Δ less than 5% red rusting
× 5% or more red rusting

(B) Secondary adhesion properties toward electrodeposition coating:

The coated test sheets each was treated by a dipping type zinc phosphating process (containig Ridoline SD 400 as alkali cleaning agent, Fixodine 5N-10 as surface conditioner and Granodine DP 4000 as zinc phosphating agent, all manufactured by Nippon Paint Co.), electrocoated with a cationic electrodeposition coating composition (Power top U-30, trademark of Nippon Paint Co.) (200V, 3 minutes coating, bath temperature 28 to 30°C), and subjected to baking at 175°C for 30 minutes to obtain the test sheets each having an electrodeposition coating of dry film thickness of 2µ. Thus obtained test sheets were dipped in water (40°C) for 240 hours and dried at a room temperature for 24 hours. Then, cross-cuts (1x1mm, 100 cuts) were given on the electrodeposition coatings and thus treated sheets each was subjected to peel test with a cellophan adhesive tape.

Film residual rate was visually observed and secondary adhesion properties toward electro deposition coating were evaluated by the following criteria:

◎ film residual rate 100%
○ film residual rate 99 ~ less than 100%
Δ film residual rate 90 ~ 98%
× film residual rate 89% or less

(C) Coating adhesion properties after stamping:

The test sheets as prepared in the preceding paragraph (B) were subjected to deep drawing (punch diameter 50mmØ , draw ratio 1.9, anti-creasing pressure 0.5t) to obtain cylindrical products. Peeling tests were carried out with adhesive cellophan tape on the sidewall of the respective cylindrical products and adhesion properties after stamping were evaluated.

◎ less than 5% peeling
○ 5 ~ less than 20% peeling
Δ 20 ~ less than 50% peeling
× 50% or more peeling

(D) viscosity:

T1 value ($V_6/V_{60}$) of the respective coating composition (solid 25%) was measured by using B viscometer.

◎ 2.0 or less
○ 2.1 ~ 5.0
× 5.1 or more

Table 2

| | Exam. 1 | Exam. 2 | Comp.Exam. 1 | Exam. 3 | Exam. 4 | Comp.Exam. 2 | Exam. 5 | Comp.Exam. 3 |
|---|---|---|---|---|---|---|---|---|
| Coating thickness ($\mu$) | 1 | 1 | 1 | 1 | 1 | 1 | 1 | 1 |
| Viscosity | ◎ | ◎ | ◎ | ◎ | ◎ | ◎ | ◎ | ◎ |
| Corrosion resistance | ◎ | ◎ | × | ◎ | ○ | × | ◎ | ○ |
| Secondary adhesion properties toward electrodeposition coating | ◎ | ◎ | ○ | ◎ | ◎ | ◎ | ○ | Δ |
| Adhesion properties after stamping | ◎ | ◎ | × | ◎ | ◎ | ◎ | ○ | × |

Table 2 (Continued)

| | Comp.Exam. 4 | Comp.Exam. 5 | Exam. 6 | Exam. 7 | Comp.Exam. 6 | Comp.Exam. 7 | Exam. 8 | Exam. 9 |
|---|---|---|---|---|---|---|---|---|
| Coating thickness ($\mu$) | 1 | 1 | 1 | 1 | 1 | 1 | 1 | 1 |
| Viscosity | ◎ | ◎ | ◎ | ○ | ◎ | ◎ | ◎ | ◎ |
| Corrosion resistance | × | × | ○ | ○ | × | × | ◎ | ◎ |
| Secondary adhesion properties toward electrodeposition coating | ○ | × | ◎ | ○ | Δ | ○ | ◎ | ○ |
| Adhesion properties after stamping | ◎ | × | ○ | ○ | ○ | ◎ | ◎ | ○ |

Table 2 (Continued)

| | Exam. 10 | Exam. 11 | Exam. 12 | Exam. 13 | Exam. 14 | Comp.Exam. 8 | Comp.Exam. 9 | Exam. 15 |
|---|---|---|---|---|---|---|---|---|
| Coating thickness ($\mu$) | 1 | 1 | 1 | 1 | 1 | 1 | 1 | 1 |
| Viscosity | ◎ | ◎ | ◎ | ◎ | ◎ | × | ◎ | ○ |
| Corrosion resistance | ◎ | ○ | ○ | ○ | ◎ | * | × | ◎ |
| Secondary adhesion properties toward electrodeposition coating | ◎ | ○ | ○ | ○ | ◎ | * | × | ◎ |
| Adhesion properties after stamping | ◎ | ○ | ○ | ○ | ◎ | * | × | ◎ |

* ..... unable to coat because of excessively higher viscosity

## Claims

1. A corrosion preventive coating composition to be applied as a thin layer for steel sheet which comprises
   (A) a bis-phenol type epoxy resin having a number average molecular weight of 300 to 100,000, in an amount of 30 weight % or more of the total solid of the composition,
   (B) at least one hardener selected from a polyisocyanate compound and a blocked polyisocyanate compound, in an amount of one thenth to 2 times the weight of said epoxy resin solid,
   (C) fumed silica having an average grain diameter of 0.1 to 100mμ , in an amount of 5 to 50 weight % of the total solid of the coating composition, and
   (D) a ketonic organic solvent in an amount of 40 weight % or more of the total weight of the coating composition, solid content of the coating composition being 10 to 50 weight %.

2. A composition according to claim 1, wherein the ketonic organic solvent (D) is at least one of methyl isobutyl ketone, acetone, cyclohexanone and isophorone.

3. A composition according to claim 1, which further contains a resol type phenol resin in an amount of 10 times to one tenth the weight of the hardener (B).

4. A composition according to claim 1, which further contains polyethylene wax in an amount of 0.1 to 10 weight % of the total solid of the composition.

## Revendications

1. Composition de revêtement de prévention contre la corrosion à appliquer en fine couche, pour feuilles d'acier, et comprenant:
   (A) une résine d'époxy type biphénol présentant un poids moléculaire moyen entre 300 et 100.000 dans une quantité de 30 % poids ou plus du total de matières solides de la composition.
   (B) au moins un durcisseur sélectionné dans un composé de polyisocyanate et un composé de polyisocyanate en bloc, en quantité de un dixième à 2 fois le poids du solide en résine d'époxy,
   (C) de la silice fumée présentant une granulométrie de 1,1 à 100 mμ dans une quantité de 5 à 50 % poids du total de matières solides de la composition de revêtement, et
   (D) un solvant organique cétonique dans une quantité de 40 % poids ou plus du poids total de la composition de revêtement, le contenu en matières solides de la composition étant entre 10 et 50 % poids.

2. Composition selon la revendication 1, dans laquelle le solvant organique cétonique (D) est au moins un solvant méthyle isobutyle cétone, acétone, cyclohexanone et isophorone.

3. Composition selon la revendication 1, contenant en outre une résine de phénol type résol en quantité de 10 pour un dixième du poids du durcisseur (B).

4. Composition selon la revendication 1, contenant en outre de la cire de polyéthylène en quantité de 0,1 pour 10 % poids du total de matières solides de la composition.

## Patentansprüche

1. Korrisionsvorbeugende Beschichtungszusammensetzung, angewendet als dünne Schicht für Stahlblech, umfassend
   (A) ein Epoxyharz vom Bis-Phenol-Typ mit einem zahlengemittelten Molekulargewicht von 300 bis 100 000, in einer Menge von 30 Gew.-% oder mehr, bezogen auf den Gesamtfeststoff der Zusammensetzung,
   (B) wenigstens einen Härter, ausgewählt unter einer Polyisocynatverbindung und einer blockierten Polyisocyanatverbindung, in einer Menge von einem zehntel bis zum zweifachen des Gewichts des Epoxyharz-Feststoffes,
   (C) aus der Rauchphase abgeschiedenes $SiO_2$ mit einem mittleren Korndurchmesser von 0,1 bis

100 mμ in einer Menge von 5 bis 50 Gew.-%, bezogen auf den Gesamtfeststoff der Beschichtungszusammensetzung, und
(D) ein ketonisches organisches Lösungsmittel in einer Menge von 40 Gew.-% oder mehr, bezogen auf das Gesamtgewicht der Beschichtungszusammensetzung, wobei der Feststoffgehalt der Beschichtungszusammensetzung 10 bis 50 Gew.-% beträgt.

**2.** Zusammensetzung nach Anspruch 1, worin das ketonische organische Lösungsmittel (D) wenigstens eines, ausgewählt unter Methylisobutylketon, Aceton, Cyclohexanon und Isophoron, ist.

**3.** Zusammensetzung nach Anspruch 1, welche außerdem ein Phenolharz vom Resol-Typ in einer Menge, entsprechend dem zehnfachen bis zu einem zehntel des Gewichts des Härters (B), enthält.

**4.** Zusammensetzung nach Anspruch 1, welche außerdem Polyethylenwachs in einer Menge entsprechend 0,1 bis 10 Gew.-%, bezogen auf den Gesamtfeststoff des Mittels, enthält.